# EUROPEAN PATENT APPLICATION

(11) **EP 3 076 711 A1**
(43) Date of publication of application: **05.10.2016**
(21) Application number: 14866767.8
(22) Date of filing: 21.11.2014
(51) Int. Cl.: H04W 36/18, H04M 3/00, H04W 16/08, H04W 52/02, H04W 92/20

(54) **COMMUNICATION CONTROL METHOD AND BASE STATION**

(30) Priority: 26.11.2013 JP 2013244260
(71) Applicant: Kyocera Corporation, Kyoto-shi, Kyoto 612-8501 (JP)
(72) Inventor: MORITA, Kugo, Kyoto-shi Kyoto 612-8501 (JP)
(74) Representative: Schwabe - Sandmair - Marx
(86) International application number: PCT/JP2014/080886
(87) International publication number: WO 2015/080039

(57) **Abstract**

A communication control method is used in a mobile communication system having an eNB 200-2 attempting to deactivate a cell of its own and an eNB 200-3 configured to perform cell extension for complementing the cell of the eNB 200-2. The communication control method includes the steps of: receiving by the eNB 200-2 a handover request for requesting acceptance of a UE 100-1, before deactivating the cell of its own; and transmitting a pre-handover request from the eNB 200-2 to the eNB 200-3 in response to accepting the handover request, the pre-handover request being used for requesting execution of a connection setting necessary for establishing connection with the UE 100-1.

## Description

### TECHNICAL FIELD

The present invention relates to a communication control method and a base station used in a mobile communication system.

### BACKGROUND ART

In 3GPP (3rd Generation Partnership Project) that is a standardization project of a mobile communication system, a power saving (energy saving) technique has been introduced of reducing power consumption of a network (for example, see Non Patent Literature 1). For example, a cell managed by a base station is deactivated, for example, at night in which communication traffic is light.

In addition, in 3GPP, in release 12 and later, it is planned to introduce an improved energy saving technique. For example, when one cell is deactivated, transmission power of the other neighboring cell is increased. Thus, coverage of the other cell can be extended (cell extension), and coverage of the cell to be deactivated can be complemented (that is, area complement).

### CITATION LIST

### NON PATENT LITERATURE

Non patent Literature 1: 3GPP technical report "TR 36.927 V11.0.0" September 2012

### SUMMARY OF INVENTION

Here, a case is assumed in which handover of a user terminal is performed to a deactivation target base station attempting to deactivate a cell of its own.

In such a case, it is considered that, when the deactivation target base station deactivates the cell of its own, the handover of the user terminal is performed anew from the deactivation target base station to an extension target base station configured to perform cell extension.

However, in such a method, handover is too late from the deactivation target base station to the extension target base station, so that disconnection of communication may occur in the user terminal. In addition, repetition of the handover as described above causes an increase in signaling associated with the handover.

Therefore, the present invention aims to provide a communication control method and a base station capable of efficiently performing handover when an energy saving technique is introduced.

A communication control method according to a first aspect is used in a mobile communication system having a deactivation target base station attempting to deactivate a cell of its own and an extension target base station configured to perform cell extension for complementing the cell of the deactivation target base station. The communication control method includes the steps of: receiving by the deactivation target base station a handover request for requesting acceptance of a user terminal, before deactivating the cell of its own; and transmitting a pre-handover request from the deactivation target base station to the extension target base station in response to accepting the handover request, the pre-handover request being used for requesting execution of a connection setting necessary for establishing connection with the user terminal.

A base station according to a second aspect corresponds to a deactivation target base station in a mobile communication system having the deactivation target base station attempting to deactivate a cell of its own and an extension target base station configured to perform cell extension for complementing the cell of the deactivation target base station. The base station includes: a receiver configured to receive a handover request for requesting acceptance of a user terminal, before deactivating the cell of its own; and a transmitter configured to transmit a pre-handover request to the extension target base station in response to accepting the handover request, the pre-handover request being used for requesting execution of connection setting necessary for establishing connection with the user terminal.

### BRIEF DESCRIPTION OF DRAWINGS

Fig. 1 is a configuration diagram of an LTE system according to an embodiment.
Fig. 2 is a block diagram of a UE according to the embodiment.
Fig. 3 is a block diagram of an eNB according to the embodiment.
Fig. 4 is a protocol stack diagram of a radio interface according to the embodiment.
Fig. 5 is a configuration diagram of a radio frame according to the embodiment.
Figs. 6(a) to 6(c) are diagrams for describing a summary of a communication control method according to the embodiment.
Fig. 7 is a diagram illustrating an operation sequence according to the embodiment.
Fig. 8 is an operation flow diagram of an eNB (ESeNB) at the time of receiving Handover Request according to the embodiment.
Fig. 9 is an operation flow diagram of an eNB (area complement eNB) at the time of receiving PreHandover Request according to the embodiment.
Fig. 10 is an operation flow diagram of the eNB (ESeNB) at the time of handover failure according to the embodiment.
Fig. 11 is an operation flow diagram of the eNB (area complement eNB) at the time of handover failure according to the embodiment.
Fig. 12 is a diagram illustrating an operation sequence according to Modification 2 of the embodiment.
Fig. 13 is a diagram illustrating an operation sequence according to Modification 3 of the embodiment.

### DESCRIPTION OF EMBODIMENTS

### [Overview of embodiments]

A communication control method according to an embodiment is used in a mobile communication system having a deactivation target base station attempting to deactivate a cell of its own and an extension target base station configured to perform cell extension for complementing the cell of the deactivation target base station. The communication control method includes the steps of: receiving by the deactivation target base station a handover request for requesting acceptance of a user terminal, before deactivating the cell of its own; and transmitting a pre-handover request from the deactivation target base station to the extension target base station in response to accepting the handover request, the pre-handover request being used for requesting execution of a connection setting necessary for establishing connection with the user terminal.

In an embodiment, the communication control method further includes the steps of: executing the connection setting by the extension target base station that receives the pre-handover request, in response to accepting the pre-handover request; and transmitting a pre-handover acknowledgment from the extension target base station to the deactivation target base station, the pre-handover acknowledgment including connection setting information according to the connection setting.

In an embodiment, the connection setting executed by the extension target base station includes assignment of a C-RNTI to the user terminal. The connection setting information includes the C-RNTI assigned to the user terminal.

In an embodiment, the communication control method further includes the step of: after handover of the user terminal to the deactivation target base station, transmitting a pre-connection notification to the user terminal from the deactivation target base station that receives the pre-handover acknowledgment, the pre-connection notification including the connection setting information.

In an embodiment, the communication control method further includes the steps of: starting the cell extension by the extension target base station when the cell of the deactivation target base station is deactivated; and switching, by the user terminal that receives the pre-connection notification, connection to the extension target base station by synchronizing with the extension target base station that starts the cell extension, based on the connection setting information.

In an embodiment, the communication control method further includes the steps of: transmitting a data path pre-switching request from the deactivation target base station to the extension target base station at the time of handover of the user terminal to the deactivation target base station, the data path pre-switching request being used for pre-switching a data path for the user terminal; and transmitting a data path switching request to a core network from the extension target base station that receives the data path pre-switching request, the data path switching request being used for establishing the data path between the extension target base station and the core network.

In an embodiment, the communication control method further includes the steps of: transmitting a deactivation advance notification from the deactivation target base station to the extension target base station, the deactivation advance notification indicating that the cell of its own is to be deactivated; and starting a first timer by the extension target base station that receives the deactivation advance notification, the first timer being used for estimating timing to deactivate the cell of the deactivation target base station. The extension target base station starts the cell extension at expiration of the first timer.

In an embodiment, the communication control method further includes the steps of: starting a second timer by the extension target base station that receives the deactivation advance notification, the second timer being used for determining timing to release the connection setting; and when the user terminal has not performed connection switching to the extension target base station, releasing the connection setting at expiration of the second timer.

A base station according to an embodiment corresponds to a deactivation target base station in a mobile communication system having the deactivation target base station attempting to deactivate a cell of its own and an extension target base station configured to perform cell extension for complementing the cell of the deactivation target base station. The base station includes: a receiver configured to receive a handover request for requesting acceptance of a user terminal, before deactivating the cell of its own; and a transmitter configured to transmit a pre-handover request to the extension target base station in response to accepting the handover request, the pre-handover request being used for requesting execution of connection setting necessary for establishing connection with the user terminal.

### [Embodiment]

An embodiment in which the present invention is applied to an LTE system will be described below.

### (System configuration)

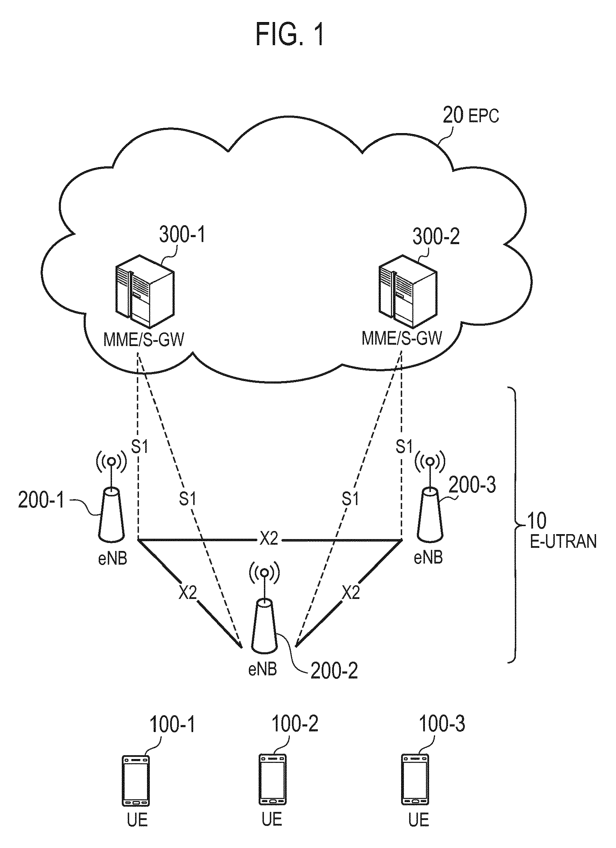

Fig. 1 is a configuration diagram of an LTE system according to an embodiment. As illustrated in Fig. 1, the LTE system according to the embodiment includes UE (User Equipment) 100, E-UTRAN (Evolved-UMTS Terrestrial Radio Access Network) 10, and EPC (Evolved Packet Core) 20.

The UE 100 corresponds to a user terminal. The UE 100 is a mobile communication device, which performs radio communication with a cell (a serving cell). The configuration of the UE 100 will be described later.

The E-UTRAN 10 corresponds to a radio access network. The E-UTRAN 10 includes eNB 200 (an evolved Node-B). The eNB 200 corresponds to a base station. The eNBs 200 are connected mutually via an X2 interface. The configuration of the eNB 200 will be described later.

The eNB 200 manages one or a plurality of cells, and performs radio communication with the UE 100 that establishes a connection with a cell of the eNB 200. The eNB 200 has a radio resource management (RRM) function, a routing function for user data, a measurement control function for mobility control and scheduling and the like. The "cell" is used as a term indicating a smallest unit of a radio communication area, and is also used as a term indicating a function of performing radio communication with the UE 100.

The EPC 20 corresponds to a core network. The E-UTRAN 10 and the EPC 20 form a network of the LTE system. The EPC 20 includes MME (Mobility Management Entity)/S-GW (Serving-Gateway) 300. The MME performs different types of mobility control and the like for the UE 100. The S-GW performs transfer control of the user data. The MME/S-GW 300 is connected to the eNB 200 via an S 1 interface.

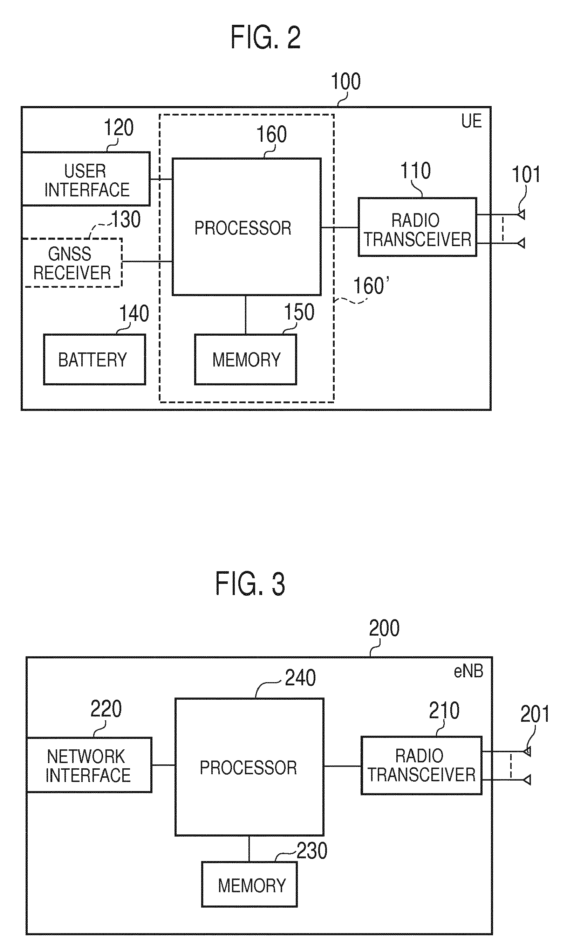

Fig. 2 is a block diagram of the UE 100. As illustrated in Fig. 2, the UE 100 includes antennas 101, a radio transceiver 110, a user interface 120, a GNSS (Global Navigation Satellite System) receiver 130, a battery 140, a memory 150, and a processor 160. The memory 150 corresponds to a storage. The processor 160 (and the memory 150) corresponds to a controller. The UE 100 may not necessarily have the GNSS receiver 130. Furthermore, the memory 150 may be integrally formed with the processor 160, and this set (that is, a chip set) may be called a processor 160'.

The antennas 101 and the radio transceiver 110 are used to transmit and receive a radio signal. The radio transceiver 110 converts a baseband signal (a transmission signal) output from the processor 160 into a radio signal and transmits the radio signal from the antenna 101. Furthermore, the radio transceiver 110 converts a radio signal received by the antenna 101 into a baseband signal (a reception signal) and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160. The GNSS receiver 130 receives a GNSS signal in order to obtain location information indicating a geographical location of the UE 100 and outputs the received signal to the processor 160. The battery 140 accumulates a power to be supplied to each block of the UE 100.

The memory 150 stores a program to be executed by the processor 160 and information to be used for processing by the processor 160. The processor 160 includes a baseband processor that performs modulation and demodulation, encoding and decoding and the like on the baseband signal, and a CPU (Central Processing Unit) that performs various types of processes by executing the program stored in the memory 150. The processor 160 may further include a codec that performs encoding and decoding on sound and video signals. The processor 160 executes various types of processes and various types of communication protocols described later.

Fig. 3 is a block diagram of the eNB 200. As illustrated in Fig. 3, the eNB 200 includes antennas 201, a radio transceiver 210, a network interface 220, a memory 230, and a processor 240. The memory 230 corresponds to a storage. The processor 240 (and the memory 230) corresponds to a controller.

The antennas 201 and the radio transceiver 210 are used to transmit and receive a radio signal. The radio transceiver 210 converts a baseband signal (a transmission signal) output from the processor 240 into a radio signal and transmits the radio signal from the antenna 201. Furthermore, the radio transceiver 210 converts a radio signal received by the antenna 201 into a baseband signal (a reception signal) and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for processing by the processor 240. The processor 240 includes a baseband processor that performs modulation and demodulation, encoding and decoding and the like on the baseband signal and a CPU that performs various types of processes by executing the program stored in the memory 230. The processor 240 executes various types of processes and various types of communication protocols described later.

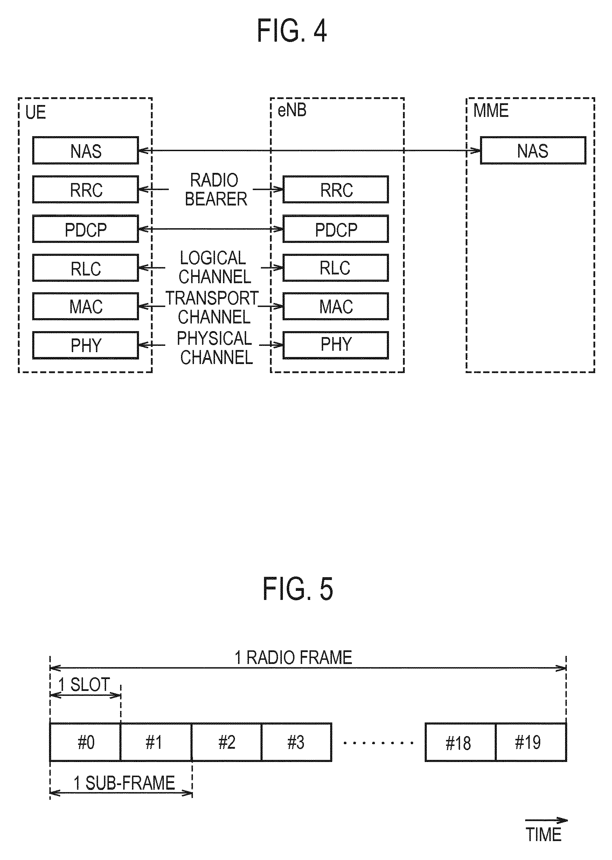

Fig. 4 is a protocol stack diagram of a radio interface in the LTE system. As illustrated in Fig. 4, the radio interface protocol is classified into a first layer to a third layer of an OSI reference model, such that the first layer is a physical (PHY) layer. The second layer includes a MAC (Medium Access Control) layer, an RLC (Radio Link Control) layer, and a PDCP (Packet Data Convergence Protocol) layer. The third layer includes an RRC (Radio Resource Control) layer.

The physical layer performs encoding and decoding, modulation and demodulation, antenna mapping and demapping, and resource mapping and demapping. Between the physical layer of the UE 100 and the physical layer of the eNB 200, user data and control signals are transmitted via a physical channel.

The MAC layer performs priority control of data, a retransmission process by a hybrid ARQ (HARQ), and the like. Between the MAC layer of the UE 100 and the MAC layer of the eNB 200, user data and control signals are transmitted via a transport channel. The MAC layer of the eNB 200 includes a scheduler for determining (scheduling) a transport format (a transport block size and a modulation and coding scheme) of an uplink and a downlink, and resource blocks to be assigned to the UE 100.

The RLC layer transmits data to an RLC layer of a reception side by using the functions of the MAC layer and the physical layer. Between the RLC layer of the UE 100 and the RLC layer of the eNB 200, user data and control signals are transmitted via a logical channel.

The PDCP layer performs header compression and decompression, and encryption and decryption.

The RRC layer is defined only in a control plane that handles control signals. Between the RRC layer of the UE 100 and the RRC layer of the eNB 200, a control signal (an RRC message) for various types of settings is transmitted. The RRC layer controls a logical channel, a transport channel, and a physical channel according to the establishment, re-establishment, and release of a radio bearer. When there is a connection (an RRC connection) between the RRC of the UE 100 and the RRC of the eNB 200, the UE 100 is in a connected state (RRC connected state). Otherwise, the UE 100 is in an idle state (RRC idle state).

An NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiple Access) is applied to a downlink, and SC-FDMA (Single Carrier Frequency Division Multiple Access) is applied to an uplink, respectively.

As illustrated in Fig. 5, a radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each resource block includes a plurality of subcarriers in the frequency direction. Of the radio resources assigned to the UE 100, a frequency resource can be identified by a resource block and a time resource can be identified by a subframe (or a slot).

### (Communication control method according to embodiment)

In the following, a communication control method according to an embodiment is described.

### (1) Overview of communication control method

The communication control method according to the embodiment relates to an improved energy saving (ES) technique. Specifically, transmission power of the other neighboring cell is increased when one cell is deactivated for the ES. Thus, coverage of the other cell can be extended (cell extension), and coverage of the cell to be deactivated can be complemented (that is, area complement).

Here, a case is assumed in which handover of a UE 100 is performed to a deactivation target eNB (hereinafter, referred to as "ESeNB") attempting to deactivate a cell of its own. In such a case, it is considered that, when the ESeNB deactivates the cell of its own, the handover of the UE 100 is performed anew from the ESeNB to an extension target eNB (hereinafter, referred to as "area complement eNB") configured to perform cell extension.

However, in such a method, handover is too late from the ESeNB to the area complement eNB, so that disconnection of communication may occur in the UE 100. In addition, repetition of the handover as described above causes an increase in signaling associated with the handover. Therefore, in the embodiment, with a method as described below, the handover is efficiently performed when the ES technique is introduced.

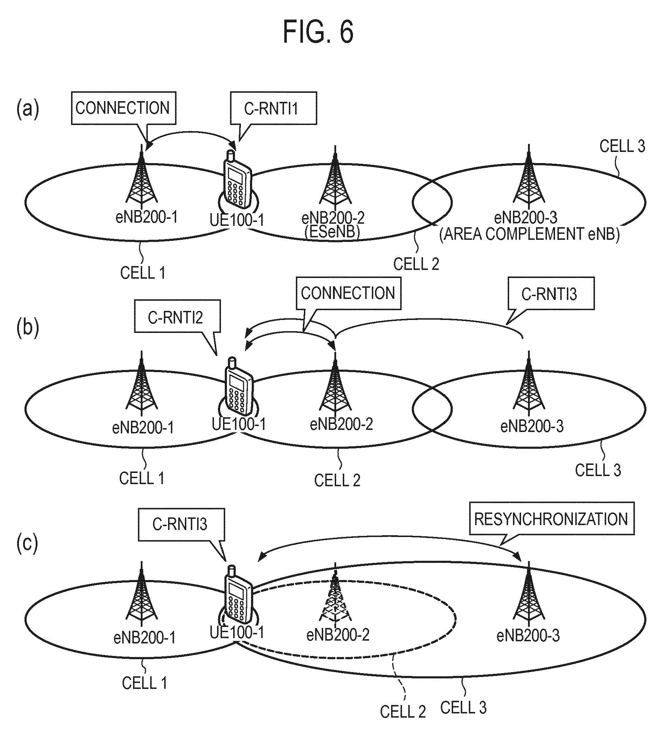

Fig. 6 is a diagram for describing a summary of the communication control method according to the embodiment. In Fig. 6, an eNB 200-2 corresponds to the ESeNB attempting to deactivate the cell of its own (cell 2). An eNB 200-3 corresponds to the area complement eNB configured to perform cell extension of the cell of its own (cell 3).

As illustrated in Fig. 6 (a), a UE 100-1 is in a state of being connected to a cell 1 of an eNB 200-1 (connected state). Specifically, a C-RNTI (Cell-Radio Network Temporary Identifier) 1 being a temporary UE identifier of the cell 1 is assigned to the UE 100-1 from the eNB 200-1. The eNB 200-1 controls communication with the UE 100-1 using the C-RNTI 1.

The UE 100-1 is located at an area in which coverage of the cell 1 and coverage of the cell 2 overlap with each other, and the eNB 200-1 determines handover for switching a serving cell of the UE 100-1 from the cell 1 to the cell 2.

As illustrated in Fig. 6(b), the eNB 200-2 assigns a C-RNTI 2 of the cell 2 to the UE 100-1 at the time of handover of the UE 100-1 to the cell 2. As a result, the UE 100-1 is in a state of being connected to the cell 2 of the eNB 200-2. In addition, the eNB 200-3 assigns a C-RNTI 3 of the cell 3 to the UE 100-1. As a result, the UE 100-1 is in a state in which RRC connection corresponding to the C-RNTI 2 is established with the eNB 200-2, and RRC connection corresponding to the C-RNTI 3 is established with the eNB 200-3.

As illustrated in Fig. 6(c), the eNB 200-2 transitions to an ES state by deactivating the cell 2, and the eNB 200-3 performs area complement by extending the cell 3. The UE 100-1, since it has already established the RRC connection corresponding to the C-RNTI 3 with the eNB 200-3, is in a state in which communication with the eNB 200-3 is possible, by connection processing in a lower layer (such as physical layer, and MAC layer), specifically, synchronizing with the eNB 200-3. Incidentally, such connection processing of only the lower layer is referred to as "resynchronization" in the drawings.

According to such communication control method, a problem can be avoided that handover is too late from the ESeNB (eNB 200-2) to the area complement eNB (eNB 200-3) and disconnection of communication occurs, and an increase can be avoided in signaling associated with the handover.

### (2) Operation sequence

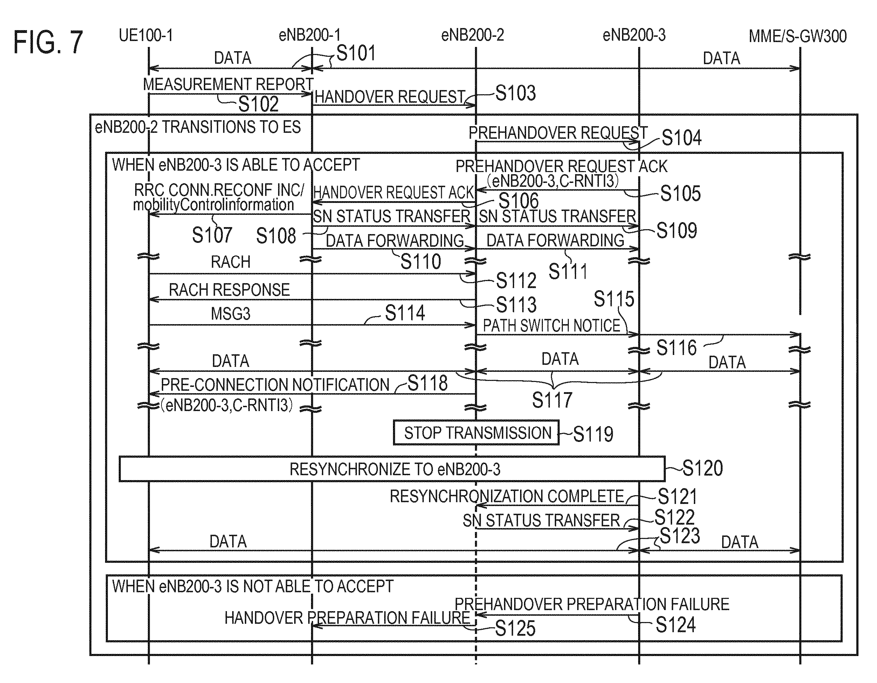

Fig. 7 is a diagram illustrating an operation sequence according to the communication control method described above. At an initial state of Fig. 7, the eNB 200-1 has determined to deactivate the cell of its own (cell 2) after a predetermined time, and is in the middle of transitioning to the ES state in which the cell of its own (cell 2) is deactivated.

As illustrated in Fig. 7, in step S101, a data path is set between the UE 100-1 and an MME/S-GW 300, and data is transmitted and received via the data path. In step S102, the UE 100-1 transmits to the eNB 200-1 Measurement Report indicating measurement results of the serving cell (cell 1) and the neighboring cell (cell 2). The eNB 200-1 that receives the Measurement Report determines the handover of the UE 100-1 to the cell 2 based on the Measurement Report received. In step S103, the eNB 200-1 transmits to the eNB 200-2 Handover Request (handover request) for requesting acceptance of the UE 100-1.

In step S104, the eNB 200-2 that receives the Handover Request, when accepting the Handover Request received, transmits to the eNB 200-3 PreHandover Request (pre-handover request) for requesting execution of a connection setting necessary for establishing connection with the UE 100-1. The eNB 200-3 that receives the PreHandover Request, when accepting the PreHandover Request, implements the connection setting. The connection setting executed by the eNB 200-3 includes assignment of the C-RNTI 3 to the UE 100-1.

In step S105, the eNB 200-3 transmits to the eNB 200-2 PreHandover Request Ack (pre-handover acknowledgment) including connection setting information (such as CRNTI 3) according to the connection setting. In step S106, the eNB 200-2 that receives the PreHandover Request Ack transmits to the eNB 200-1 Handover Request Ack (handover acknowledgment). In step S107, the eNB 200-1 that receives the Handover Request Ack transmits to the UE 100-1 a handover command including information necessary for the handover to the cell 2.

In step S108, the eNB 200-1 transmits to the eNB 200-2 SN Status Transfer relating to the data transmitted and received to/from the UE 100-1. In step S109, the eNB 200-2 that receives the SN Status Transfer transfers to the eNB 200-3 the SN Status Transfer received. In step S110, the eNB 200-1 transmits to the eNB 200-2 Data Forwarding including data not transmitted to the UE 100-1. In step S111, the eNB 200-2 that receives the Data Forwarding transfers to the eNB 200-3 the Data Forwarding received.

In steps S112-S114, the UE 100-1 performs a non-contention based random access procedure to establish connection with the eNB 200-2, based on the handover command. Specifically, in step S112, the UE 100-1 transmits to the eNB 200-2 on a random access channel (Rach) a random access preamble specified by the handover command. In step S113, the eNB 200-2 that receives the random access preamble transmits to the UE 100-1 a random access response including an uplink timing correction value and the C-RNTI 2. The UE 100-1 that receives the random access response transmits to the eNB 200-2 a connection request (so called Msg3) for requesting establishment of RRC connection. As a result, the RRC connection is established between the UE 100-1 and the eNB 200-2, and the handover is completed.

In step S 115, the eNB 200-2 transmits to the eNB 200-3 Pass Switch Notice (data path pre-switching request) for pre-switching of the data path for the UE 100-1.

In step S116, the eNB 200-3 that receives the Pass Switch Notice transmits to the MME/S-GW 300 Path Switch Request (data path switching request) for setting a data path between the eNB 200-3 and the MME/S-GW 300. The MME/S-GW 300 that receives the Path Switch Request from the eNB 200-3 switches the data path for the UE 100-1 from a data path for the eNB 200-1 to a data path for the eNB 200-3, instead of switching from the data path for the eNB 200-1 to a data path for the eNB 200-2. As a result, a data path is set between the UE 100-1 and the MME/S-GW 300 via the eNB 200-2 and the eNB 200-3. In step S 117, the data is transmitted and received via the data path.

In step S118, the eNB 200-2 transmits to the UE 100-1 a pre-connection notification including connection setting information of the eNB 200-3 (such as C-RNTI 3). The pre-connection notification further includes a cell ID of the cell 3 corresponding to the C-RNTI 3. The UE 100-1 establishes RRC connection with the eNB 200-3 due to the fact that the C-RNTI 3 is assigned to the UE 100-1.

In step S 119, the eNB 200-2 transitions to the ES state by deactivating the cell of its own (cell 2), that is, stopping transmission. In addition, when the cell 2 is deactivated, the eNB 200-3 starts cell extension of the cell 3. The UE 100-1 is not able to detect a reference signal of the cell 2 any longer, and detects a reference signal of the cell 3.

In step S120, the UE 100-1 switches to the RRC connection with the eNB 200-3 by synchronizing with the cell 3 (eNB 200-3) based on the connection setting information of the eNB 200-3 (C-RNTI 3). Here, the same procedure is performed as steps S112-S114 from the UE 100-1 for communication connection. Thus, the UE 100-1 switches the serving cell from the cell 2 to the cell 3.

In step S121, the eNB 200-3 transmits to the eNB 200-2 a notification indicating that synchronization with the UE 100-1 is completed. In step S122, the eNB 200-2 that receives the notification transmits the SN Status Transfer to the eNB 200-3. As a result, a data path is set via the eNB 200-3 without going through the eNB 200-2 between the UE 100-1 and the MME/S-GW 300. In step S123, the data is transmitted and received via the data path.

Incidentally, although operation of steps S105-S123 is that of when the eNB 200-3 is able to accept the UE 100-1, when the eNB 200-3 is not able to accept the UE 100-1, the eNB 200-3 that receives the PreHandover Request transmits to the eNB 200-2 PreHandover Preparation failure indicating that the PreHandover Request is refused (step S124). The eNB 200-2 that receives the PreHandover Preparation failure transmits to the eNB 200-1 Handover Preparation failure indicating that the handover is refused (step S125).

### (3) Operation flow

Next, an operation flow is described of each eNB 200 according to the operation sequence described above.

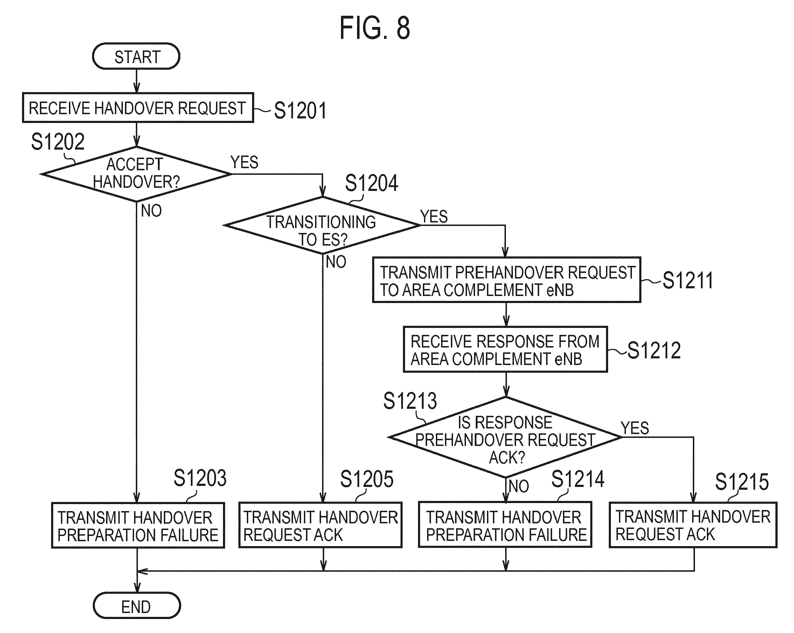

Fig. 8 is an operation flow diagram of the eNB 200-2 at the time of receiving the Handover Request from the eNB 200-1.

As illustrated in Fig. 8, the eNB 200-2 receives the Handover Request (step S1201), and determines whether or not to accept the Handover Request (step S1202). When not accepting the Handover Request (step S1202; NO), the eNB 200-2 transmits the Handover Preparation failure to the eNB 200-1 (step S1203).

When accepting the Handover Request (step S1202; YES), the eNB 200-2 determines whether or not to be in the middle of transitioning to the ES state (step S1204). When not being in the middle of transitioning to the ES state (step S1204; NO), the eNB 200-2 transmits the Handover Request Ack to the eNB 200-1 (step S1205).

When it is in the middle of transitioning to the ES state (step S1204; YES), the eNB 200-2 transmits the PreHandover Request to the eNB 200-3 being an area complement eNB (step 51211), and receives a response from the eNB 200-3 (step S1212).

When the response is not the PreHandover Request Ack (step S1213; NO), the eNB 200-2 transmits the Handover Preparation failure to the eNB 200-1 (step S1214). On the other hand, when the response is the PreHandover Request Ack (step S1213; YES), the eNB 200-2 transmits the Handover Request Ack to the eNB 200-1 (step S1215).

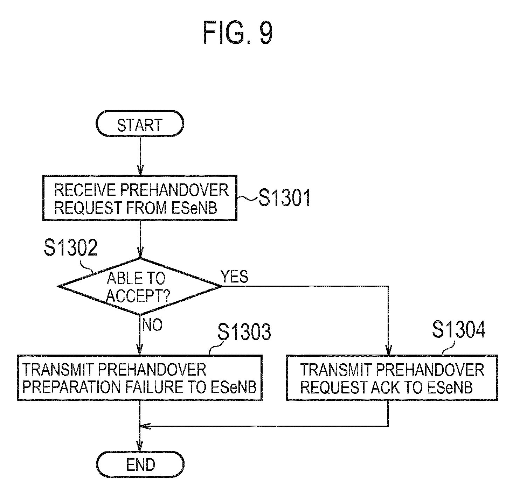

Fig. 9 is an operation flow diagram of the eNB 200-3 at the time of receiving the PreHandover Request from the eNB 200-2.

As illustrated in Fig. 9, the eNB 200-3 receives the PreHandover Request (step S1301), and determines whether or not to accept the PreHandover Request (step S1302). When not accepting the PreHandover Request (step S1302; NO), the eNB 200-3 transmits the PreHandover Preparation failure to the eNB 200-2 (step S1303). On the other hand, when accepting the PreHandover Request (step S1302; YES), the eNB 200-3 transmits the PreHandover Request Ack to the eNB 200-2 (step S1304).

### [Modification 1]

In the embodiment described above, a case is not described in which handover fails of the UE 100-1 from the eNB 200-1 (cell 1) to the eNB 200-2 (cell 2); however, operation is performed as follows at the time of handover failure.

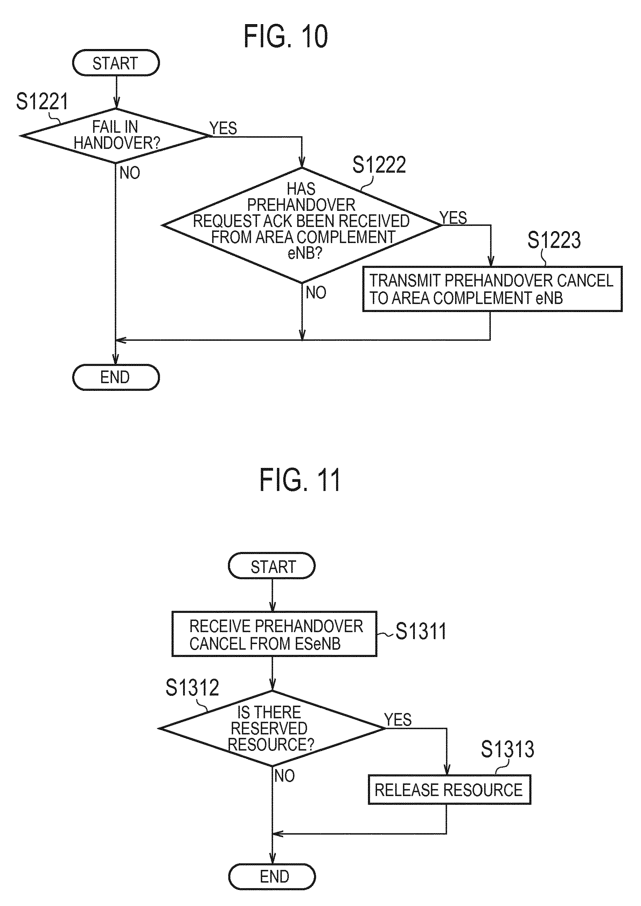

Fig. 10 is an operation flow diagram of the eNB 200-2 at the time of handover failure.

As illustrated in Fig. 10, the eNB 200-2, when detecting handover failure of the UE 100-1 to the cell of its own (cell 2) (step S1221; YES), determines whether or not the PreHandover Request Ack has been received from the eNB 200-3 (area complement eNB) (step S1222). When having received the PreHandover Request Ack (step S1222; YES), the eNB 200-2 transmits to the eNB 200-3 PreHandover Cancel indicating handover cancellation (step S1223).

Fig. 11 is an operation flow diagram of the eNB 200-3 at the time of handover failure.

As illustrated in Fig. 11, the eNB 200-3 receives the PreHandover Cancel from the eNB 200-2 (step S1311), and determines whether or not there is a resource (such as C-RNTI 3) reserved for the UE 100-1 (step S1312). When there is the resource (step S 1312; YES), the eNB 200-3 releases the resource (step S 1313).

### [Modification 2]

In the embodiment described above, a case is not described in which a plurality of area complement eNBs exists; however, when the plurality of area complement eNBs is set, the eNB 200-2 transmits the PreHandover Request to the plurality of area complement eNBs. Alternatively, the PreHandover Request can be transmitted to only an area complement eNB to which the UE 100-1 is highly likely to be connected, of the plurality of area complement eNBs.

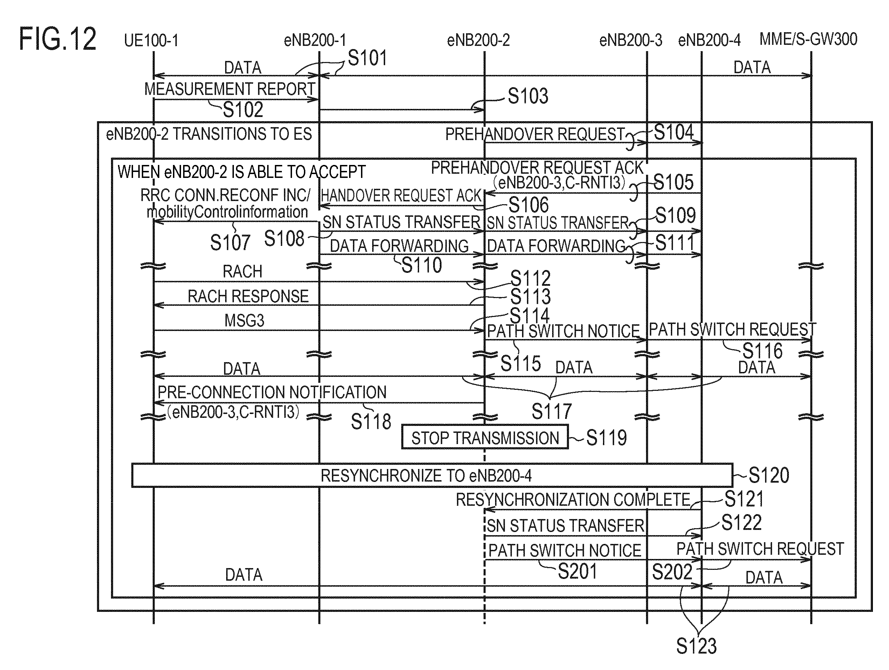

Fig. 12 is a diagram illustrating an operation sequence in a case in which a plurality of area complement eNBs (eNB 200-3, eNB 200-4) is set. Here, a difference is described from the operation sequence (Fig. 7) according to the embodiment described above.

As illustrated in Fig. 12, when the plurality of area complement eNBs (eNB 200-3, eNB 200-4) is set, the eNB 200-2 transmits the PreHandover Request to the eNB 200-3 and the eNB 200-4 (step S104). Each of the eNB 200-3 and the eNB 200-4, when accepting the PreHandover Request, transmits the PreHandover Request Ack to the eNB 200-2.

In addition, when the plurality of area complement eNBs (eNB 200-3, eNB 200-4) is set, the eNB 200-2 transmits the SN Status Transfer to the eNB 200-3 and the eNB 200-4 (step S109), and transmits the Data Forwarding to the eNB 200-3 and the eNB 200-4 (step S111).

However, the eNB 200-2 transmits the Pass Switch Notice to only one of the eNB 200-3 and the eNB 200-4 (here, eNB 200-3) (step S115). As a result, a data path is set between the eNB 200-3 and the MME/S-GW 300.

Here, when the UE 100-1 switches to RRC connection with the eNB 200-4 by synchronizing with the eNB 200-4 instead of the eNB 200-3 (step S120), the eNB 200-4 transmits to the eNB 200-2 a notification indicating that synchronization is completed with the UE 100-1 (step S121).

In that case, the eNB 200-2 transmits the SN Status Transfer to the eNB 200-4 (step S122), and transmits the Pass Switch Notice to the eNB 200-4 (step S201). The eNB 200-4 that receives the Pass Switch Notice transmits the Path Switch Request to the MME/SGW 300 (step S202). The MME/S-GW 300 that receives the Path Switch Request from the eNB 200-4 switches the data path for the UE 100-1 from a data path for the eNB 200-3 to a data path for the eNB 200-4 (step S123).

Incidentally, the operation sequence of Fig. 12 can be modified as follows.

Specifically, the eNB 200-4 transmits to not only the eNB 200-2 but also the eNB 200-3 the notification indicating that synchronization is completed with the UE 100-1. The eNB 200-3 that receives the notification transmits the SN Status Transfer to the eNB 200-4. Then, the eNB 200-4 that receives the SN Status Transfer transmits the Path Switch Request to the MME/S-GW 300. As a result, the MME/S-GW 300 switches the data path for the UE 100-1 from the data path for the eNB 200-3 to the data path for the eNB 200-4.

### [Modification 3]

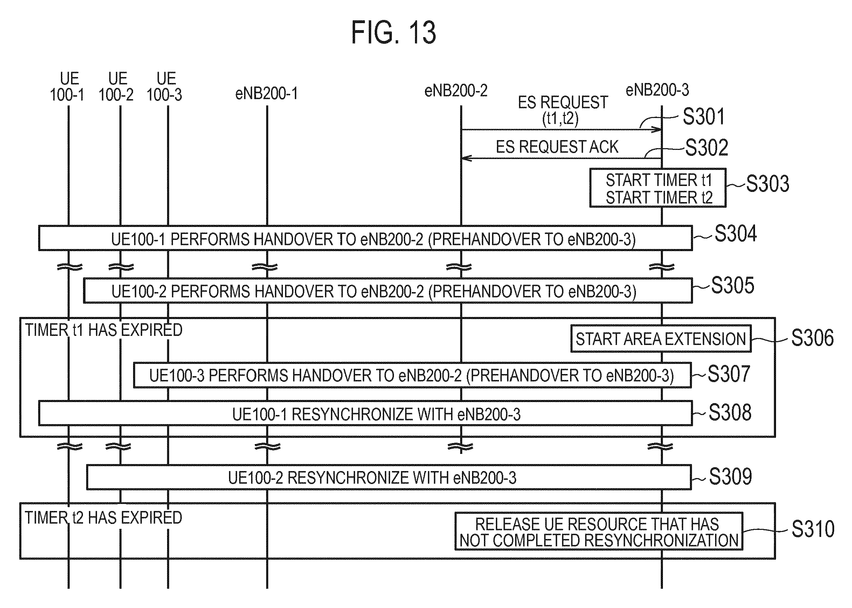

In Modification 3, a method is described in which the eNB 200-3 being an area complement eNB determines timing to perform cell extension and the like. Fig. 13 is a diagram illustrating an operation sequence according to Modification 3. In Fig. 13, the UE 100-1 to UE 100-3 are UEs performing handover from the eNB 200-1 (cell 1) to the eNB 200-2 (cell 2).

As illustrated in Fig. 13, in step S301, the eNB 200-2 transmits to the eNB 200-3 ES Request (deactivation advance notification) indicating that the cell of its own (cell 2) is planned to be deactivated.

In step S302, the eNB 200-3 that receives the ES Request transmits the ES Request Ack to the eNB 200-2.

In step S303, the eNB 200-3 starts a timer t1 for estimating timing to deactivate the cell 2 of the eNB 200-2 (hereinafter referred to as "deactivation timing"), and a timer t2 for determining timing to release a connection setting (such as C-RNTI 3) (hereinafter referred to as "release timing").

Incidentally, the ES Request can include a value t1 (such as timer value, and time) indicating the deactivation timing or cell extension start timing. In that case, the eNB 200-3 sets the value t1 to the timer t1, and starts the timer t1.

In addition, the ES Request can include a value t2 (such as timer value, and time) indicating the release timing. In that case, the eNB 200-3 sets the value t2 to the timer t2, and starts the timer t2.

Further, the ES Request can include a value t3 (such as timer value, and time) indicating timing to end the cell extension. In that case, the eNB 200-3 sets the value t3 to a timer t3, and starts the timer t3.

In steps S304, S305, and S307, the UE 100-1 to UE 100-3 establish RRC connection with the eNB 200-2 (and eNB 200-3) with the operation sequence according to the embodiment described above. In such operation sequence, the eNB 200-2, when transmitting to the UE 100-1 to UE 100-3 a pre-connection notification including connection setting information of the eNB 200-3 (such as C-RNTI 3), can notify the UE 100-1 to UE 100-3 of the value t2 indicating the release timing.

In step S306, the eNB 200-3 starts extension (area extension) of the cell 3, at the expiration of the timer t1.

In steps S308 and S309, the UE 100-1 and the UE 100-2 switch to RRC connection with the eNB 200-3 by synchronizing with the eNB 200-3 (cell 3).

In step S310, the eNB 200-3 releases the connection setting (such as C-RNTI 3) of the UE 100-3 that has not performed the connection switching to the eNB 200-3, at the expiration of the timer t2. Similarly, the UE 100-3 also releases the connection setting (such as C-RNTI 3).

### [Other embodiments]

In the embodiment described above, a case has not been considered in which a handover source eNB is an area complement eNB. However, in the case in which the handover source eNB is the area complement eNB, the operation according to the embodiment described above is modified as follows. Specifically, in Fig. 6, there are C-RNTI 1 of the handover source eNB (cell 1) and C-RNTI 3 of the area complement eNB (cell 3); however, when the area complement eNB = the handover source eNB (cell 3 = cell 1), it is read as the C-RNTI 3 = the C-RNTI 1. In that case, the C-RNTI 1 can be returned in the Handover Request Ack, to the Handover Request from the ESeNB (cell 2).

In the embodiment described above, an LTE system has been described as an example of a mobile communication system; however, it is not limited to the LTE system, and the present invention can be applied to a system other than the LTE system.

The present application claims priority of Japanese Patent Application No. 2013-244260 filed on November 26, 2013, and all the contents thereof are incorporated herein.

### INDUSTRIAL APPLICABILITY

The present invention is useful in the radio communication field such as the mobile communication.

## Claims

1. A communication control method used in a mobile communication system having a deactivation target base station attempting to deactivate a cell of its own and an extension target base station configured to perform cell extension for complementing the cell of the deactivation target base station, the communication control method comprising the steps of:
receiving by the deactivation target base station a handover request for requesting acceptance of a user terminal, before deactivating the cell of its own; and
transmitting a pre-handover request from the deactivation target base station to the extension target base station in response to accepting the handover request, the pre-handover request being used for requesting execution of a connection setting necessary for establishing connection with the user terminal.

2. The communication control method according to claim 1, further comprising the steps of:
executing the connection setting by the extension target base station that receives the pre-handover request, in response to accepting the pre-handover request; and
transmitting a pre-handover acknowledgment from the extension target base station to the deactivation target base station, the pre-handover acknowledgment including connection setting information according to the connection setting.

3. The communication control method according to claim 2, wherein
the connection setting executed by the extension target base station includes assignment of a C-RNTI to the user terminal, and
the connection setting information includes the C-RNTI assigned to the user terminal.

4. The communication control method according to claim 2, further comprising the step of:
after handover of the user terminal to the deactivation target base station, transmitting a pre-connection notification to the user terminal from the deactivation target base station that receives the pre-handover acknowledgment, the pre-connection notification including the connection setting information.

5. The communication control method according to claim 4, further comprising the steps of:
starting the cell extension by the extension target base station when the cell of the deactivation target base station is deactivated; and
switching, by the user terminal that receives the pre-connection notification, connection to the extension target base station by synchronizing with the extension target base station that starts the cell extension, based on the connection setting information.

6. The communication control method according to claim 1, further comprising the steps of:
transmitting a data path pre-switching request from the deactivation target base station to the extension target base station at the time of handover of the user terminal to the deactivation target base station, the data path pre-switching request being used for pre-switching a data path for the user terminal; and
transmitting a data path switching request to a core network from the extension target base station that receives the data path pre-switching request, the data path switching request being used for establishing the data path between the extension target base station and the core network.

7. The communication control method according to claim 1, further comprising the steps of:
transmitting a deactivation advance notification from the deactivation target base station to the extension target base station, the deactivation advance notification indicating that the cell of its own is to be deactivated; and
starting a first timer by the extension target base station that receives the deactivation advance notification, the first timer being used for estimating timing to deactivate the cell of the deactivation target base station, wherein
the extension target base station starts the cell extension at expiration of the first timer.

8. The communication control method according to claim 7, further comprising the steps of:
starting a second timer by the extension target base station that receives the deactivation advance notification, the second timer being used for determining timing to release the connection setting; and
when the user terminal has not performed connection switching to the extension target base station, releasing the connection setting at expiration of the second timer.

9. A base station corresponding to a deactivation target base station in a mobile communication system having the deactivation target base station attempting to deactivate a cell of its own and an extension target base station configured to perform cell extension for complementing the cell of the deactivation target base station, the base station comprising:
a receiver configured to receive a handover request for requesting acceptance of a user terminal, before deactivating the cell of its own; and
a transmitter configured to transmit a pre-handover request to the extension target base station in response to accepting the handover request, the pre-handover request being used for requesting execution of connection setting necessary for establishing connection with the user terminal.
